# EUROPÄISCHE PATENTSCHRIFT

(11) **EP 1 201 626 B1**
(45) Veröffentlichungstag und Bekanntmachung des Hinweises auf die Patenterteilung: **29.06.2005**
(21) Anmeldenummer: 01123841.7
(22) Anmeldetag: 05.10.2001
(51) Int. Cl.: C04B 41/86

(54) **Verfahren zum Ausbessern von fehlerhaften Vertiefungen in Keramikgütern**
Method for repairing faulty depressions in ceramic articles
Procédé de réparation de cavités défectueuses dans des articles céramiques

(30) Priorität: 10.10.2000 DE 10050033
(43) Veröffentlichungstag der Anmeldung: 02.05.2002
(73) Patentinhaber: Lenhart, Armin, Prof. Dr., 91077 Neunkirchen a. Brand (DE); Pösl, Rudolf, Dipl.-Ing., 90543 Nürnberg (DE)
(72) Erfinder: Lenhart, Armin, Prof. Dr., 91077 Neunkirchen a. Brand (DE)
(74) Vertreter: Christ, Dieter, Dipl.-Ing.

(56) Entgegenhaltungen:
- EP-A- 0 114 691
- EP-A- 0 610 556
- US-A- 6 064 034
- US-A- 6 127 005

## Beschreibung

Die Erfindung betrifft ein Verfahren zum Ausbessern von fehlerhaften Vertiefungen in Keramikgütern.

Bei Keramikteilen, wie zum Beispiel Waschbecken oder Toilettenschüsseln stellt sich häufig nach mehrstündigen Brand heraus, dass die Glasur kleine Beschädigungen wie zum Beispiel Löcher ausweist, die optisch einen unschönen Eindruck hervorrufen.

Gängige Praxis ist, die Vertiefungen aufzubohren, mit Brennmasse zu füllen und einen erneuten mehrstündigen Brennvorgang des gesamten Gutes vorzunehmen. Diese Vorgehensweise ist energetisch relativ aufwendig und kann Probleme der Farbveränderung mit sich bringen.

Es ist bereits bekannt (vgl. US-PS 6127005) ,zur Vermeidung thermischer Überbelastungen den Überzug mit Zuschlägen zu versehen sodaß sich ein thermischer Wärmeausdehnungskoeffizient von kleiner/gleich 0.4 x 10 hoch minus 6/°C ergibt.. Zur Farbabtönung kann neben anderen Stoffen auch SnO2 zugemischt werden.

Es ist ferner bekannt ,für eine Lasersteuerung Computer, Monitor usw. zu verwenden (vgl. US-PS 6064034). Die Aufgabe der vorliegenden Erfindung besteht darin, das Verfahren so auszugestalten, daß die Schäden schnell und energetisch günstig ausgebessert werden können. Diese Aufgabe wird dadurch gelöst ,daß die im Patentanspruch definierte Mischung im Fokus des Lasers aufgeschmolzen wird und flüssig mit hoher Geschwindigkeit in die Vertiefung geschossen wird.

Um unzulässige Wärmebeanspruchungen möglichst zu vermeiden ,haben die Zusatzstoffe vorteilhafterweise einen zwischen 30 und 70%, insbesondere zwischen 45 und 55 % liegender Anteil und einen Wärmeausdehnungskoeffizienten kleiner oder gleich 3,3 x10⁻⁶ K⁻¹ Es kommen Stoffe wie Borosilikat, Kieselglas oder Zerodur (Handelsname) in Frage.

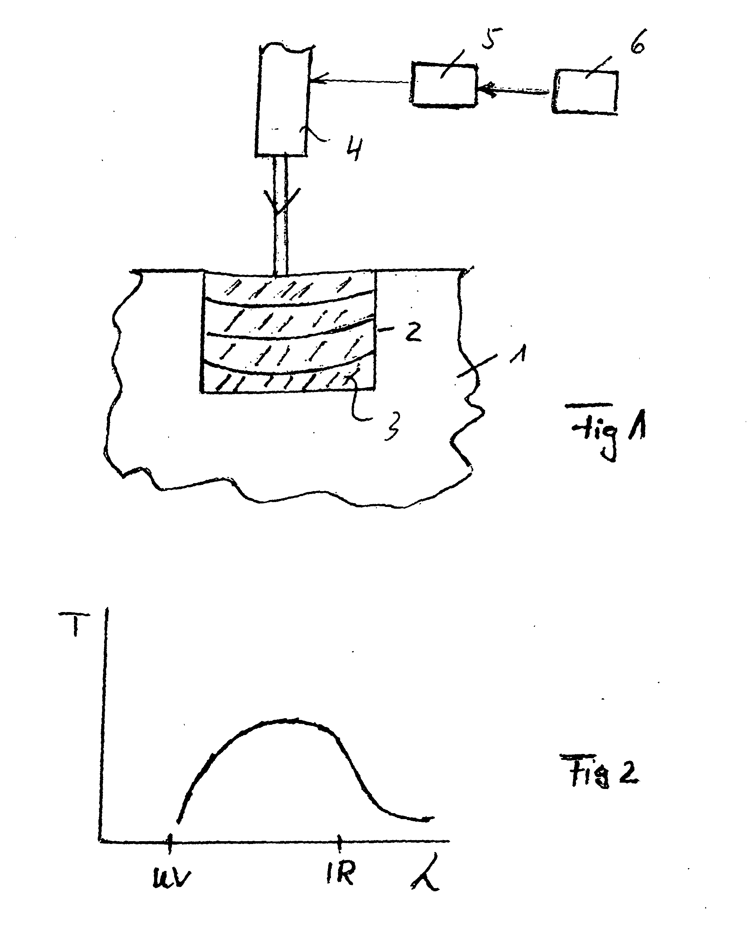

Anhand eines in der Zeichnung dargestellten Ausführungsbeispiels sei die Erfindung näher erläutert, wobei Figur 1 den Schichtauftrag und Fig. 2 Transmission eines Energieabsorbers als Funktion der Wellenlänge zeigen.

Das aufgebohrte Loch 2 in Keramikteil 1 wird in Schichten 3 mit einer durch Energie des Lasers erhitzten Mischung aus Glasur und Zusatzstoff gefüllt. Dieser dient zur Verringerung der mechanischen Spannungen beim Prozess.
Der Vorgang wird mit Rechner 5 gesteuert und durch Monitor 6 überwacht.
Der Vorgang kann mit Hilfe einer Kamera auch automatisiert werden.
Als Energieabsorber können SnO₂, TiO₂ oder Glas dienen.

Fig.2 zeigt die Transmission T als Funktion der Wellenlänge λ. Im sichtbaren Bereich zwischen Ultraviolett UV und Infrarot IR ist die Transmission von Glasur und Energieabsorber hoch. Dies führt dazu, dass die eigentliche Erhitzung im Infrarotbereich stattfindet,in dem der Energieabsorber nicht mehr transparent ist.

Die Vorgänge eignen sich gut zur Automatisierung wenn zur Beobachtung eine Kamera verwendet wird.

## Patentansprüche

1. Verfahren zum Ausbessern von fehlerhaften Vertiefungen in glasierten Keramikgütern, bei dem eine durch Energie eines Lasers erhitzte Mischung aus Glasur und Zusatzstoffen in der Vertiefung aufgetragen wird, wobei die Zusatzstoffe einen im Verhältnis zur Glasur niedrigen Wärmeausdehnungskoeffizienten haben und die Mischung einen Energieabsorber enthält, **dadurch gekennzeichnet, daß** die Mischung im Fokus des Lasers (4) aufgeschmolzen wird und flüssig mit hoher Geschwindigkeit in die Vertiefung(2) geschossen wird.

## Claims

1. Method for repairing faulty depressions in glazed ceramics in which a mixture of glaze and additional material heated by the energy of a laser is deposited in the depression, the additional material having a lower coefficient of thermal expansion than the glaze and the mixture containing energy absorbing means **characterized** that the mixture is molded in the focus of the laser (4) and shot with high speed in liquid form into the depression.

## Revendications

1. Procédé de réparation de cavités défectueuses dans des articles céramiques glacés avec une melange de glaçure et material additiv echauffé de l'energie d'un laser et déposée dans la cavite ,le material additiv en relation de glaçure avec un coefficient plus bas d'expansion de chaleur et la melange contenant un absorbant d'énergie caracterisé que la melange est entrée en fusion dans le focus du laser(4) et tirée avec grande vitesse dans la cavité.
